# EUROPÄISCHE PATENTSCHRIFT

(11) **EP 4 192 637 B1**
(45) Veröffentlichungstag und Bekanntmachung des Hinweises auf die Patenterteilung: **17.04.2024**
(21) Anmeldenummer: 21763256.1
(22) Anmeldetag: 06.08.2021
(51) Int. Cl.: B22D 11/106, B22D 11/103, B22D 11/113, B22D 41/04, B22D 41/00, B22D 41/08, B22D 41/12, B22D 41/14, B22D 41/16, B22D 41/50

(54) **VAKUUMINDUKTIONSGIESSEINRICHTUNG ZUM GIESSEN VON METALL UND METALLLEGIERUNGEN UNTER VAKUUM UND/ODER SCHUTZGASATMOSPHÄRE SOWIE VERFAHREN ZUM WECHSELN EINER STOPFENSTANGE UND/ODER EINES VERSCHLUSSKÖRPERS EINER STOPFENGIESSVORRICHTUNG AN EINER VAKUUMINDUKTIONSGIESSEINRICHTUNG**
VACUUM INDUCTION CASTING DEVICE FOR CASTING METAL AND METAL ALLOYS UNDER A VACUUM AND/OR A PROTECTIVE GAS ATMOSPHERE, AND METHOD FOR CHANGING A STOPPER ROD AND/OR A CLOSURE BODY OF A STOPPER CASTING DEVICE ON A VACUUM INDUCTION CASTING DEVICE
DISPOSITIF DE COULÉE PAR INDUCTION SOUS VIDE PERMETTANT LA COULÉE DE MÉTAL ET D'ALLIAGES MÉTALLIQUES SOUS VIDE ET/OU À UNE ATMOSPHÈRE DE GAZ DE PROTECTION, ET PROCÉDÉ DE CHANGEMENT D'UNE QUENOUILLE ET/OU D'UN CORPS DE FERMETURE D'UN DISPOSITIF DE COULÉE DE QUENOUILLE SUR UN DISPOSITIF DE COULÉE PAR INDUCTION SOUS VIDE

(30) Priorität: 06.08.2020 DE 102020209989
(43) Veröffentlichungstag der Anmeldung: 14.06.2023
(73) Patentinhaber: SMS Group GmbH, 40237 Düsseldorf (DE)
(72) Erfinder: DEMIRCI, Cihangir, 47807 Krefeld (DE)
(74) Vertreter: Kross, Ulrich
(86) Internationale Anmeldenummer: PCT/EP2021/072028
(87) Internationale Veröffentlichungsnummer: WO 2022/029300

(56) Entgegenhaltungen:
- CH-A- 509 846
- GB-A- 1 483 024
- GB-A- 2 013 120
- JP-A- H06 126 400
- PHILLIPPS G ET AL: "WARMHALTE-UND GIESSOEFEN FUER STRANGGIESSANLAGEN", GIESSEREI,, Bd. 84, Nr. 3, 10. Februar 1997 (1997-02-10), Seiten 19-23, XP000679590, ISSN: 0016-9765

## Beschreibung

Die Erfindung betrifft eine Vakuum-Induktions-Gießeinrichtung zum Gießen von Metall und Metalllegierungen unter Vakuum und/oder Schutzgasatmosphäre sowie ein Verfahren zum Wechseln einer Stopfenstange und/oder eines Verschlusskörpers einer Stopfengießvorrichtung und/oder einer Gießdüse an einer solchen Vakuum-Induktions-Gießeinrichtung.

Eine Vakuum-Induktions-Gießeinrichtung, die vakuumdicht an eine Stranggießanlage angeschlossen ist, ist beispielsweise aus der DE 1 952 083 A bekannt. Die DE 1 952 083 A beschreibt ein unter Vakuum durchgeführtes Stranggussverfahren zum Vergießen von Metallen oder anderen Materialien, die eine Entgasung erfordern und die in der Wärme in Gegenwart normaler atmosphärischer Bedingungen reagieren. Diese Anlage weist eine Vakuumkammer auf, in der eine Pfanne als Vorratsbehälter für das flüssige Metall angeordnet ist. Unter der Pfanne ist ein Verteiler in Form eines Trichters angeordnet, der das flüssige Metall aufnimmt und es in einen Zulauf verteilt, der ein gleichmäßiges Vergießen des flüssigen Metalls aus dem Verteiler in eine Kokille einer Stranggießanlage ermöglicht, die als Form für das durchlaufende flüssige Metall dient. Bei dem bekannten Verfahren erfolgt das Gießen unter Vakuum. Die Pfanne ist mit einem Kegelverschluss ausgestattet, der einen konischen Verschlusskörper aufweist, welcher mit einem entsprechend konisch ausgeführten Teil der Gießdüse zusammenwirkt.

Weiterer Stand der Technik ist aus den Druckschriften DE 11 2009 001 950 T5, EP 0 518 536 A1, KR 10-1090429, US 3,779,743, US 3,888,300, WO 2015/101552 A1, DE 20 174 69 A1, DE 36 40 269 C1, EP 0 869 854 B1, EP 1 042 087 B1, JP 2013 039 588 A, US 6,070,649 und US 2016/0052049 A1 bekannt.

Die sogenannten Tauchrohre, Gießdüsen oder Kegelsteine sowie die Verschlusskörper in Form von konischen Stopfen, Stopfenstangen oder dergleichen mit unterschiedlichen Abmessungen und Formen dienen zum flüssig Chargieren von Metallen und Nichteisenmetallen in Schmelz- und Warmhalteöfen sowie in Verteilerrinnen, Pfannen, Vorratsbehälter, Zwischenbehälter und dergleichen. Diese werden aus feuerfestem Material gefertigt und mit einem feuerfesten Mörtel im Bodenbereich von Schmelz- und Warmhalteöfen sowie Rinnen und Verteilerrinnen eingesetzt bzw. verklebt.

Naturgemäß unterliegen diese Teile einem Verschleiß bzw. verbrauchen sich. Zum Wechseln eines verbrauchten Tauchrohres und/oder einer verbrauchten Gießdüse und oder des Verschlusskörpers ist einerseits eine längere Betriebsunterbrechung erforderlich, andererseits sind die meisten Anlagen so konzipiert, dass ein solcher Austausch nur unter atmosphärischen Bedingungen möglich ist. Dabei ist in der Regel ein Eintritt von sauerstoffhaltiger Luft in den Schmelzofen und/oder in die Gießeinrichtung sowie gegebenenfalls sogar in das nachgeschaltete Aggregat nicht zu verhindern. Insbesondere bei Anlagen die quasi kontinuierlich unter Vakuum und/oder Schutzgasatmosphäre betrieben werden sollen, ist dies nicht gewünscht.

Eine Vakuum-Induktions-Gießeinrichtung gemäß Oberbegriff von Anspruch 1 ist aus der CH 509 846 A bekannt. Weiterer Stand der Technik ist aus den Dokumenten GB 1 483 024 A und GB 2 013 120 A bekannt.

Der Erfindung liegt daher die Aufgabe zugrunde, eine Vakuum-Induktions-Gießeinrichtung zum Gießen von Metall und Metalllegierungen unter Vakuum und/oder Schutzgasatmosphäre bereitzustellen, die in Bezug auf die Austauschbarkeit der sich verbrauchenden Teile, beispielsweise der Stopfengießvorrichtung oder der Gießdüse, verbessert ist.

Der Erfindung liegt weiterhin die Aufgabe zugrunde, ein Verfahren zum Wechseln einer Stopfenstange und/oder eines Verschlusskörpers einer Stopfengießvorrichtung und/oder einer Gießdüse an einer solchen Vakuum Induktions-Gießeinrichtung bereitzustellen.

Die Aufgabe wird gelöst durch eine Vakuum-Induktions-Gießeinrichtung mit den Merkmalen des Anspruchs 1 sowie durch ein Verfahren mit den Merkmalen des Anspruchs 8. Weiterhin wird erfindungsgemäß eine Anlage zum Chargieren, Schmelzen und Gießen von Metall und Metalllegierungen vorgeschlagen, die eine erfindungsgemäße Gießeinrichtung umfasst.

Vorteilhafte Ausgestaltungen der Erfindung ergeben sich aus den Unteransprüchen.

Ein Gesichtspunkt der Erfindung betrifft eine Vakuum-Induktions-Gießeinrichtung zum Gießen von Metall und Metalllegierungen unter Vakuum und/oder Schutzgasatmosphäre, die wenigstens eine Speicherkammer und einen mit der Speicherkammer kommunizierenden Vorherd umfasst, der wenigstens eine Stopfengießvorrichtung aufweist, wobei die Vakuum-Induktions-Gießeinrichtung gasdicht an eine Stranggießanlage oder eine Pulververdüsungsanlage als nachgeschaltetes Aggregat lösbar ankoppelbar ist und die Vakuum-Induktions-Gießeinrichtung dazu ausgebildet ist, die Schmelze unter Vakuum und/oder Schutzgasatmosphäre in das nachgeschaltete Aggregat zu übergeben, wobei die Speicherkammer mit dem Vorherd um eine Kippachse drehbar gelagert ist, derart, dass Schmelze von dem Vorherd in die Speicherkammer und zurück verlagerbar ist und die Stopfengießvorrichtung Mittel zum gasdichten Verschließen wenigstens einer Gießdüse innerhalb des Vorherds umfasst.

Der Begriff Gießdüse im Sinne der vorliegenden Erfindung umfasst alle möglichen Varianten der Ausprägung einer solchen Gießdüse einschließlich eines konischen Mündungstrichters bzw. Kegelsteins und/oder eines Tauchrohres. Eine Stopfengießvorrichtung im Sinne der vorliegenden Erfindung ist eine Vorrichtung mittels derer über einen Verschlusskörper in Form eines konischen Stopfens oder einer Stange oder dergleichen schmelzflüssiges Metall aus der Gießdüse dosiert werden kann bzw. mit der die Gießdüse bedarfsweise verschlossen werden kann.

Ein wesentlicher Gesichtspunkt der Erfindung ist die Ausgestaltung der Vakuum-Induktions-Gießeinrichtung derart, dass die Speicherkammer und der mit dieser kommunizierende Vorherd um eine Kippachse drehbar gelagert ist, sodass die Schmelze von dem Vorherd in die Speicherkammer und zurück verlagerbar ist. Auf diese Art und Weise ist es möglich, die gefüllte Gießeinrichtung in eine Wartungsstellung oder Reparaturstellung zu verbringen, in der die Gießdüse von dem nachgeschalteten Aggregat abgekoppelt und zugänglich ist. Dabei befindet sich in vorteilhafter Weise kein geschmolzenes Metall mehr im Bereich der Gießdüse.

Unter Metall und Metalllegierungen im Sinne der vorliegenden Anmeldung werden Metalle und Nichteisen Metalllegierungen verstanden. Darunter fallen auch sogenannter Hochleistungslegierungen oder Superlegierungen.

Schutzgase im Sinne der vorliegenden Erfindung können sein Argon, Stickstoff oder Helium. Auch wenn der Begriff Vakuum-Induktions-Gießeinrichtung einen ausschließlichen Betrieb unter Vakuum suggeriert, so ist erfindungsgemäß vorgesehen, dass die Vakuum-Induktions-Gießeinrichtung sowohl für den Betrieb unter Vakuum als auch für den Betrieb unter Schutzgasatmosphäre ausgelegt ist.

Bei der Vakuum-Induktions-Gießeinrichtung gemäß der Erfindung ist vorgesehen, dass die Stopfengießvorrichtung als Mittel zum gasdichten Verschließen der wenigstens einen Gießdüse wenigstens eine feuerfeste Haube umfasst, die innerhalb des Vorherds eine gasdichte Einhausung eines Einlaufs der Gießdüse bildet.

Die Haube kann beispielsweise an einem führenden Ende eines Gestänges der Stopfengießvorrichtung angeordnet sein und mit dem Gestänge verlagerbar sein.

Bei einer besonders vorteilhaften Ausgestaltung der erfindungsgemäßen Vakuum-Induktions-Gießeinrichtung ist vorgesehen, dass die Stopfengießvorrichtung wenigstens eine Stopfenverschlusseinheit mit einer Stopfenstange sowie eine weitere Verschlusseinheit mit einer Haube an dem führenden Ende einer Stange aufweist, die dazu ausgebildet sind, wechselweise mit einer Gießdüse zusammenzuwirken. Im Falle dessen, dass ein Austausch der Gießdüse oder des Tauchrohres erforderlich ist, ist es möglich, die Gießdüse oder das Tauchrohr innerhalb des Vorherdes der Gießeinrichtung mittels der Haube abzudichten, sodass die Gießdüse oder das Tauchrohr von außen zugänglich bleiben und beispielsweise das verbrauchte Material der Gießdüse bergmännisch entfernt werden kann und anschließend die Zustellung einer neuen Gießdüse erfolgen kann.

Besonders vorteilhaft ist es, wenn die wenigstens eine Stopfenverschlusseinheit und die weitere Verschlusseinheit an einem drehbaren Gestänge befestigt sind, das als Revolver ausgebildet ist. So lässt sich mit einem Antrieb wahlweise eine Stopfenverschlusseinheit oder die weitere Verschlusseinheit in eine entsprechende Betriebsstellung verbringen.

Zweckmäßigerweise ist wenigstens ein Vakuumschieber innerhalb des Vorherds vorgesehen, der dazu ausgebildet ist, eine Durchführung für eine Stopfenstange der Stopfengießvorrichtung gasdicht zu verschließen.

Vorzugsweise sind Mittel zur Absaugung von Gas an wenigstens einer Gießdüse vorgesehen. Diese können zum Abführen von etwa aus der Vakuum-Induktions-Gießeinrichtung austretenden Prozessgases, insbesondere zur Absaugung von austretenden Inertgas vorgesehen sein.

Zweckmäßigerweise ist als Mittel zur Absaugung von Gas wenigstens eine Ringabsaugung um wenigstens eine Gießdüse vorgesehen.

Ein weiterer Gesichtspunkt der Erfindung betrifft ein Verfahren zum Wechseln einer Stopfenstange und/oder eines Verschlusskörpers einer Stopfengießvorrichtung und/oder einer Gießdüse an einer Vakuum-Induktions-Gießeinrichtung zum Gießen von Metall und Metalllegierungen unter Vakuum und/oder Schutzgasatmosphäre, die wenigstens eine Speicherkammer und einen mit der Speicherkammer kommunizierenden Vorherd umfasst, der wenigstens eine Stopfengießvorrichtung aufweist, wobei die Vakuum-Induktions-Gießeinrichtung gasdicht an eine Stranggießanlage oder eine Pulververdüsungsanlage als nachgeschaltetes Aggregat lösbar ankoppelbar ist und die Vakuum-Induktions-Gießeinrichtung dazu ausgebildet ist, die Schmelze unter Vakuum und/oder Schutzgasatmosphäre in das nachgeschaltete Aggregat zu übergeben, wobei das Verfahren folgende Verfahrensschritte umfasst:
a) Verschließen wenigstens einer Gießdüse mit dem Verschlusskörper der Stopfengießvorrichtung,
b) Kippen der Vakuum-Induktions-Gießeinrichtung um eine Kippachse und Abkoppeln der Vakuum-Induktions-Gießeinrichtung von dem nachgeschalteten Aggregat derart, dass die in dem Vorherd befindliche Schmelze in die Speicherkammer verlagert wird,
c) Ausbringen der Stopfenstange mit dem Verschlusskörper aus dem Vorherd unter Aufrechterhaltung von Vakuum und oder Schutzgasatmosphäre innerhalb der Speicherkammer und des Vorherds,
d) Wechseln der Stopfenstange und/oder des Verschlusskörpers und/oder der Gießdüse,
e) Einbringen einer weiteren Verschlusseinheit mit einer Haube an dem führenden Ende eines Gestänges in den Vorherd,
f) gasdichtes Verschließen der wenigstens einen Gießdüse innerhalb des Vorherds unter Verwendung der Haube,
g) Wechseln der Gießdüse und
h) Ausbringen der weiteren Verschlusseinheit und Einbringen einer Stopfenstange mit Verschlusskörper unter Aufrechterhaltung eines Vakuums und/oder einer Schutzgasatmosphäre innerhalb der Speicherkammer und des Vorherds.

Die Verfahrensschritte a) bis f) werden vorzugsweise in der Reihenfolge ihrer Aufzählung durchgeführt. Zunächst erfolgt das Verschließen der Gießdüse mit dem Verschlusskörper der Stopfengießvorrichtung. Umfasst der Vorherd eine Vielzahl von Gießdüsen, werden selbstverständlich alle Gießdüsen verschlossen. Sodann wird die Vakuum-Induktions-Gießeinrichtung um eine Kippachse gekippt bzw. geschwenkt, wobei gleichzeitig die Gießdüse oder die Gießdüsen von dem nachgeschalteten Aggregat abgehoben werden. Dabei wird die in dem Vorherd befindliche Schmelze in die Speicherkammer verlagert. Dann kann die Stopfenstange mit dem Verschlusskörper aus dem Vorherd entfernt werden.

Vorzugsweise ist die Stopfenstange in einer gegenüber der Atmosphäre abgedichteten Stopfenkammer geführt, sodass das Vakuum und/oder die Schutzgasatmosphäre innerhalb der Speicherkammer und des Vorherds erhalten bleiben. Die Stopfenstange und oder der Verschlusskörper und/oder die Gießdüse können sodann gewechselt werden.

Unter einer Gießdüse im Sinne der vorliegenden Erfindung ist ein konischer Düseneinlauf/Kegelstein und/oder ein sogenanntes Tauchrohr zu verstehen, die vorzugsweise aus einer feuerfesten Keramik bestehen.

Bei Durchführung des Verfahrensschritts f) wird die Haube vorzugsweise mit einem Dichtflansch auf einen entsprechenden Dichtflansch der Einfassung der Gießdüse aufgesetzt.

Bevorzugt wird das Verfahren unter Verwendung der Vakuum-Induktions-Gießeinrichtung der vorstehend beschriebenen Art mit einem oder mehreren der vorstehend beschriebenen Merkmalen durchgeführt.

Die Erfindung betrifft weiterhin eine Anlage zum Chargieren, Schmelzen und Gießen von Metall und Metalllegierungen unter Vakuum und/oder unter Schutzgasatmosphäre umfassend wenigstens eine Vakuum-Induktions-Schmelzeinrichtung, Mittel zum Chargieren von Ausgangsstoffen unter Vakuum und/oder Schutzgas in die wenigstens eine Vakuum-Induktions-Schmelzeinrichtung sowie eine Vakuum-Induktions-Gießeinrichtung der vorstehend beschriebenen Art mit einem oder mehreren Merkmalen wie vorstehend beschrieben.

Die Erfindung wird nachstehend anhand eines Ausführungsbeispiels in den beigefügten Zeichnungen erläutert.

### Es zeigen:

- Figur 1: eine Ansicht einer Anlage gemäß der Erfindung,
- Figur 2: eine schematische Darstellung einer vertikalen Stranggießanlage als nachgeschaltetes Aggregat,
- Figur 3: eine schematische Darstellung einer horizontalen Stranggießanlage als nachgeschaltetes Aggregat,
- Figur 4: eine schematische Darstellung einer Kreisbogen Stranggießanlage als nachgeschaltetes Aggregat,
- Figur 5: eine schematische Darstellung einer Gieß-Walzanlage als nachgeschaltetes Aggregat,
- Figur 6: eine schematische Darstellung einer Pulververdüsungsanlage als nachgeschaltetes Aggregat,
- Figur 7: eine schematische Schnittansicht der Anlage gemäß Figur 1 entlang der Schnittebene VI-VI in Figur 1 und
- Figur 8: eine schematische Schnittansicht einer Vakuum-InduktionsGießeinrichtung gemäß der Erfindung, die die Funktionsweise der Stopfengießvorrichtung gemäß der Erfindung veranschaulicht.

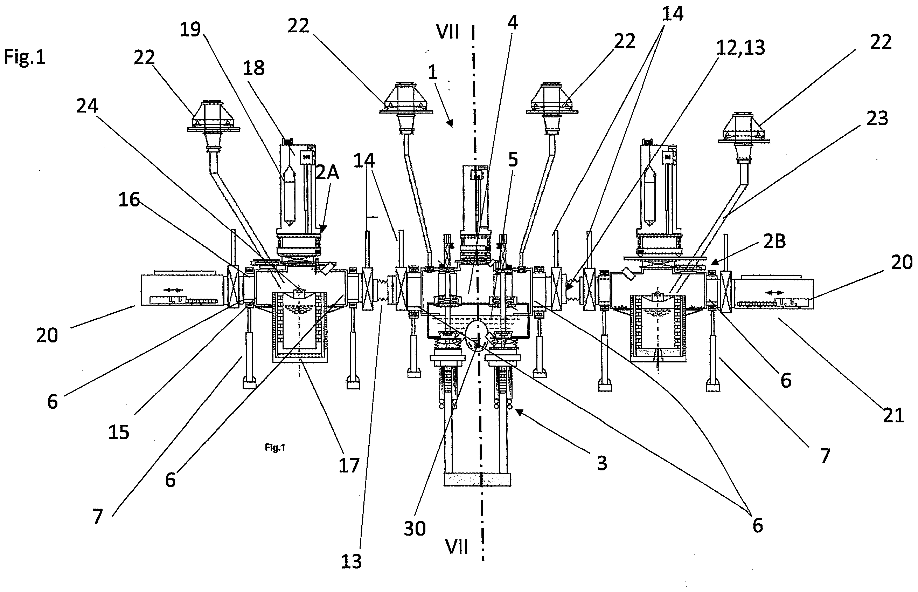

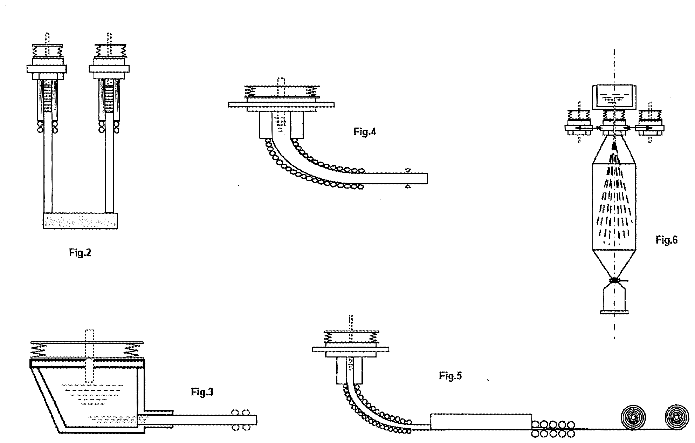

Die in Figur 1 dargestellte Anlage umfasst eine Vakuum-Induktions-Gießeinrichtung 1 und zwei an die Vakuum-Induktions-Gießeinrichtung 1 angeschlossene Vakuum-Induktions-Schmelzeinrichtungen 2A, 2B. Bei dem dargestellten Ausführungsbeispiel ist die Vakuum-Induktions-Gießeinrichtung 1 an eine vertikale Stranggießanlage 3 als nachgeschaltetes Aggregat angekoppelt. Anstelle dieser vertikalen Stranggießanlage 3 können die in den Figur 3-6 dargestellten Aggregate vorgesehen sein.

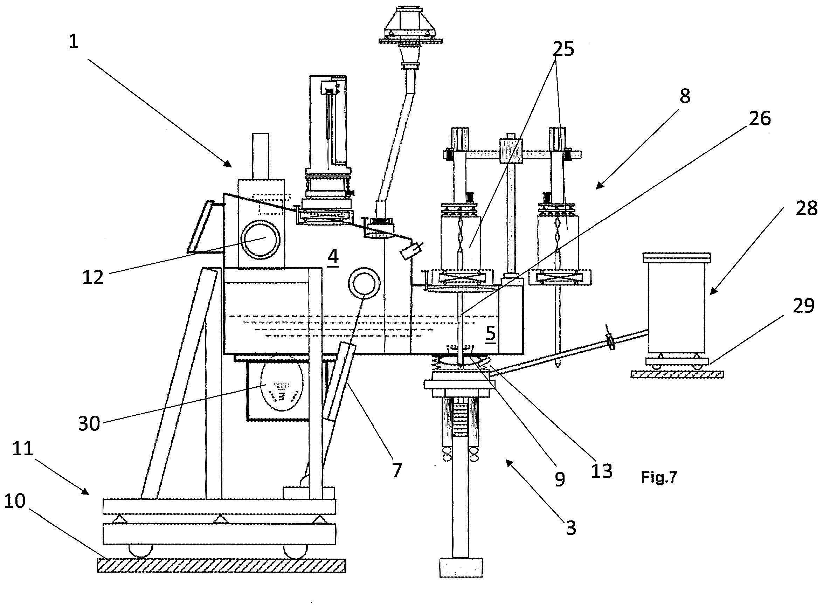

Wie dies insbesondere aus der Schnittansicht in Figur 7 erkennbar ist, umfasst die Vakuum-Induktions-Gießeinrichtung 1 eine Speicherkammer 4 und einen Vorherd 5, die miteinander kommunizieren. Innerhalb der Speicherkammer 4 ist ein Tiegelinduktor 30 angeordnet, der die Schmelze auf Gießtemperatur hält.

Die Anordnung umfassend die Speicherkammer 4 und den Vorherd 5 in Kipplagern 6 um eine horizontale Achse schwenkbar gelagert (siehe Figur 1) und mittels wenigstens einer Kolben-Zylinder-Anordnung 7 um die horizontale Achse drehbar gelagert.

Die Vakuum-Induktions-Gießeinrichtung 1 umfasst zwei Stopfengießvorrichtungen 8 sowie zugehörige Gießdüsen 9, über die schmelzflüssiges Metall an das jeweils nachgeschaltete Aggregat, beispielsweise an die vertikale Stranggießanlage 3, übergeben werden kann. Weiterhin ist die Vakuum-Induktions-Gießeinrichtung 1 auf einen auf Schienen 10 verfahrbaren Untergestell 11 angeordnet, über die die Vakuum-Induktions-Gießeinrichtung 1 quer ihrer Kippachse verfahrbar ist. Die Vakuum-Induktions-Gießeinrichtung 1 ist auf Wiegezellen des Untergestells 11 gelagert.

Die Speicherkammer 4 der Vakuum-Induktions-Gießeinrichtung 1 ist jeweils über seitliche Durchführungen 12, welche sich durch die Kipplager 6 erstrecken, an jeweils eine Vakuum-Induktions-Schmelzeinrichtung 2A, 2B angeschlossen. Die Verbindung zwischen den Vakuum-Induktions-Schmelzeinrichtungen 2A, 2B und der Speicherkammer 4 der Vakuum-Induktions-Gießeinrichtung 1 ist mittels Faltenbalgabdichtungen 13 verschlossen. Die Durchführungen 12 sind weiterhin mittels Vakuumschiebern 14 verschließbar.

Das Aufschmelzen der Ausgangsstoffe erfolgt in den Vakuum-Induktions-Schmelzeinrichtungen 2A, 2B, die die Schmelze an die Speicherkammer 4 der Vakuum-Induktions-Gießeinrichtung 1 übergeben. Die Vakuum-Induktions-Schmelzeinrichtungen 2A, 2B sind im Wesentlichen identisch, sodass nachstehend nur eine der Vakuum-Induktions-Schmelzeinrichtungen 2A, 2B beschrieben wird.

Jede der Vakuum-Induktions-Schmelzeinrichtungen 2A, 2B umfasst eine Ofenkammer 15, die Teil eines Oberofens 16 ist und die mit einem Schmelztiegel 17 gasdicht verschlossen ist. Der Schmelztiegel 17 ist in bekannter Art und Weise als induktiv beheiztes Schmelzgefäß ausgebildet. Dieser wird über ein nicht dargestelltes Schienensystem an den Oberofen 16 herangefahren und von unten an diese befestigt. Der Schmelztiegel 17 wird bei dem dargestellten Beispiel in dem Oberofen 16 gehalten. Der Oberofen 16 ist in Kipplagern 6 schwenkbar gelagert und mittels zweier Kolben-Zylinder-Anordnungen 7 um eine horizontale Schwenkachse drehbar gelagert. An die Oberseite des Oberofens 16 ist ein Chargierturm 18 angeflanscht, der ebenfalls gasdicht anschließbar ist und als Schleuse für Chargierkörbe 19 dient, die das Ausgangsmaterial in den Schmelztiegel 17 einbringen. Seitlich an die Ofenkammer 15 ist eine Wechselkammer 20 angeschlossen, über die eine Verteilerrinne 21 als Gießverteiler in die Ofenkammer 15 einbringbar ist. Die Wechselkammer 20 ist ebenfalls als Schleusenkammer ausgebildet und über einen Vakuumschieber 14 bezüglich der Ofenkammer 15 absperrbar.

Mit dem Bezugszeichen 22 sind auf Wiegezellen gelagerte Bunkeranlagen bezeichnet, die Ausgangsstoffe oder Legierungszusätze über Beschickungsleitungen 23 dem Schmelztiegel 17 und/oder der Speicherkammer 4 aufgeben können. Die Bunkeranlagen 22 und/oder Beschickungsleitungen 23 können jeweils mittels nicht näher bezeichneter Vakuumschieber zu den Ofenkammern 15 und/oder zu der Speicherkammer 4 verschlossen werden.

Bei dem Verfahren gemäß der Erfindung werden zunächst Rohstoffe über Chargierkörbe 19 den Schmelztiegeln 17 unter Vakuum und/oder Schutzgasatmosphäre zugeführt und in diesen ebenfalls unter Vakuum und/oder Schutzgasatmosphäre aufgeschmolzen, gegebenenfalls unter Beschickung mit weiteren Legierungsbestandteilen. Nach abgeschlossener Behandlung der Schmelze in einem Schmelztiegel 17 wird beispielsweise in die Ofenkammer 15 einer Vakuum-Induktions-Schmelzeinrichtung 2A eine in einer Wechselkammer 20 vorgewärmte Verteilerrinne 21 in die Ofenkammer 15 so verbracht, dass diese sich unterhalb einer Gießschnauze 24 des Schmelztiegels 17 befindet. Die Verteilerrinne 21 ist so bemessen, dass diese sich in der Gießstellung bis in die Speicherkammer 4 erstreckt. Die Vakuum Induktions-Schmelzeinrichtungen 2A,2B haben bezüglich der Speicherkammer 4 der Vakuum-Induktions-Gießeinrichtung 1 ein Gefälle von etwa 2°. Der Schmelztiegel 17 wird um die Kipplager 6 geschwenkt, sodass sich die Schmelze in diesem vollständig in die Verteilerrinne 21 entleeren kann. Die Schmelze gelangt durch die mittels Faltenbalgabdichtung 13 verschlossenen Durchführungen 12 von der Vakuum-Induktions-Schmelzeinrichtung 2A in die Vakuum-Induktions-Gießeinrichtung 1. Über eine Regelung der Stopfengießvorrichtung 8 in dem Vorherd 5 der Vakuum-Induktions-Gießeinrichtung 1 gelangt die Schmelze dann ebenfalls unter Vakuum und/oder Schutzgas in das nachgeschaltete Aggregat. Während die Schmelze in der Vakuum-Induktions-Schmelzeinrichtung 2A gegossen wird, kann die Behandlung der Schmelze in der anderen Vakuum-Induktions-Schmelzeinrichtung 2B erfolgen, die anschließend die Schmelze zwecks Überführung in die Speicherkammer 4 der Vakuum-Induktions-Gießeinrichtung gießt.

Über eine Stopfenregelung wird die flüssige Schmelze durch die Gießdüsen 9 beispielsweise in die Stranggießkokille der vertikalen Stranggießanlage 3 dosiert.

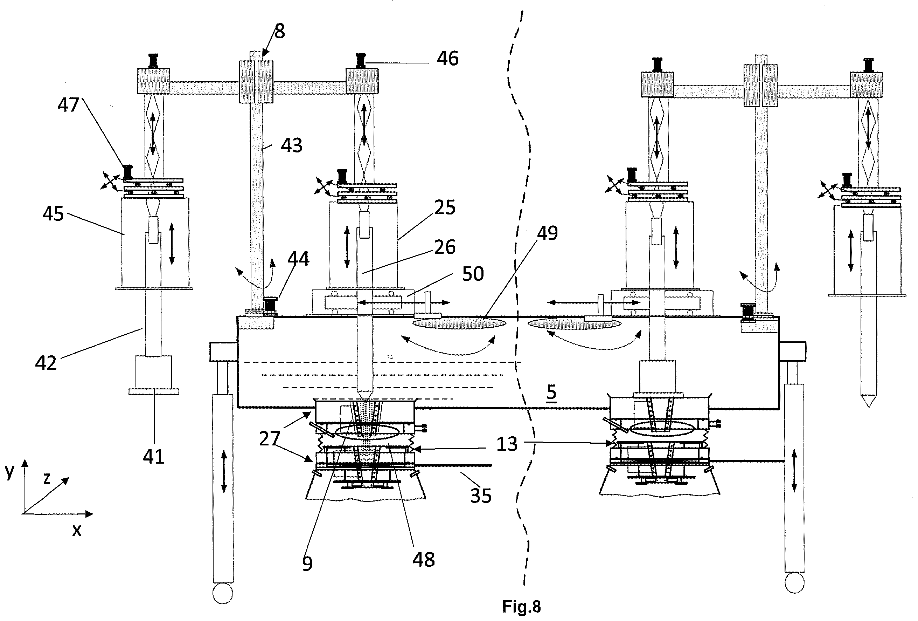

Die Stopfengießvorrichtung 8 umfasst in Stopfenkammern 25 geführte Stopfenstangen 26, die an ihrem führenden Ende einen Verschlusskörper bilden oder aufweisen und bei verschlossenen Gießdüsen 9 in diese eintauchen. Die Vakuumdichtigkeit der Stranggießkokillen wird über Vakuumflansche 27 gewährleistet, die Teil der in der Figur 8 dargestellten Faltenbalgabdichtung 13 sind.

Die Dosierung von Gießpulver in die Stranggießkokille bzw. auf die Schmelze unter Vakuum und/oder Schutzgas erfolgt durch mindestens eine vakuum- und schutzgasdichte Dosiereinrichtung 28, die auf Wiegezellen gelagert sowie auf einem verfahrbaren Wagen 29 angeordnet ist. Eine Dosierleitung, die gegen die Atmosphäre mit einem Vakuumventil geschützt ist, mündet in die Vakuumabdichtung der Schnittstelle zwischen der Vakuum-Induktions-Gießeinrichtung 1 und das nachgeschaltete Aggregat bzw. die nachgeschaltete Stranggießanlage 3.

Zum Wechsel der Gießdüse 9 und/oder der Stopfenstange 26 werden die Gießdüsen 9 mit dem Verschlusskörper der Stopfenstange 26 verschlossen, sodann wird die Vakuum-Induktions-Gießeinrichtung 1 gekippt, sodass die Schmelze sich von dem Vorherd 5 in die Speicherkammer 4 verlagert. Anschließend kann die Vakuum-Induktions-Gießeinrichtung 1 auf den Schienen 10 quer zu der Kippachse verlagert werden.

Die Funktionsweise der Stopfengießvorrichtung 8 sowie das erfindungsgemäße Verfahren werden nachstehend unter Bezugnahme auf die Figur 8 erläutert. Die Stopfengießvorrichtung 8 gemäß der Erfindung umfasst zusätzlich zu den Stopfenstangen 26 als Stopfenverschlusseinheit eine weitere Verschlusseinheit 40 mit einer Haube 41 an dem führenden Ende einer Stange 42. Die Stange 42 mit der Haube 41 aus einem feuerfesten Material ist zusammen mit wenigstens einer Stopfenstange 26 und einem an der Stopfenstange 26 vorgesehenen Verschlusskörper für die zugehörigen Gießdüsen 9 um eine um die Y-Achse drehbares Gestänge 43 angeordnet. Der Verschlusskörper kann einteilig mit der Stopfenstange ausgebildet sein.

Die im Folgenden verwendeten Richtungsangaben beziehen sich auf das in Figur 8 eingezeichnete Koordinatensystem. Die in Figur 8 gezeigte Vakuum-Induktions-Gießeinrichtung 1 umfasst zwei in dem Vorherd 5 angeordnete Gießdüsen 9, wobei jeder Gießdüse 9 eine Stopfengießvorrichtung 8 zugeordnet ist und jede Stopfengießvorrichtung 8 ein Gestänge 43 umfasst, wobei an jedem Gestänge 43 eine Stopfenstange 26 und eine weitere Stange 42 vorgesehen ist, an deren abgelegenen, führenden Ende jeweils einer Haube 41 angeordnet ist. Das Gestänge 43 ist um die Y-Achse drehbar angeordnet und in dieser Achse verlagerbar, und zwar mittels eines ersten Antriebs 44. Die Verschlusseinheit 40 umfasst eine Vakuumkammer 45, die funktional der Stopfenkammern 25 entspricht und innerhalb derer die Stange 42 axial (in y-Richtung) und/oder radial (in Richtung x-z) verlagerbar ist. Die axiale Verstellung bzw. Verlagerung der Stange 42 sowie der Stopfenstange 26 erfolgt mit einem zweiten Antrieb 46. Eine Zentrierung der Stopfenkammern 25 und Vakuumkammern 45 relativ zu den entsprechenden Öffnungen in der Oberseite des Vorherds 5 erfolgt über dritte Antriebe 47. Die betreffende Öffnungen in der Oberseite das Vorherdes 5 sind mittels feuerfester Drehschieber 49 absperrbar und auf der Außenseite mit einem Vakuumflansch 50 versehen.

Die Stopfenkammern 25 oder die Vakuumkammer 45 sind jeweils wahlweise mit entsprechenden Dichtflächen gegen die Vakuumflansche 50 auf der Oberseite des Vorherdes 5 in Eingriff bringbar.

Das Gestänge 43 ist so ausgebildet, dass bei entsprechender Drehung nach Art eines Revolvers entweder die Verschlusseinheit 40 oder die Stopfengießvorrichtung 8 in einer Arbeitsstellung auf dem Vorherd 5 in eine Betriebsstellung verbracht werden kann.

Figur 8 zeigt auf der linken und der rechten Seite jeweils einen anderen Betriebszustand der Vakuum-Induktions-Gießeinrichtung 1 gemäß der Erfindung, wobei die linke Seite den Zustand während eines Gießvorgangs zeigt und die rechte Seite eine Betriebsstellung zeigt, in der die Verschlusseinheit 40 die Gießdüse 9 innerhalb des Vorherds 5 verschließt.

Im Folgenden wird das Verfahren zum Wechseln einer Gießdüse 9 und einer Stopfenstange 26 gemäß der Erfindung unter Bezugnahme auf die Figuren 7 und 8 erläutert. Bei dem dargestellten Ausführungsbeispiel besitzt die Stopfenstange 26 eine konische Spitze, die den Verschlusskörper der Stopfengießvorrichtung 8 bildet. Erfindungsgemäß kann auch eine nicht einteilige Ausbildung der Stopfenstange 26 mit einem separaten Verschlusskörper vorgesehen sein.

Zum Wechsel der Gießdüse 9 und/oder der Stopfenstange 26 und/oder eines Verschlusskörpers der Stopfengießvorrichtung 8 wird zunächst über eine Stopfenregelung die Stopfenstange 26 in die Gießdüse 9 eingefahren, sodass die Gießdüse 9 verschlossen ist. Die linke Seite in Figur 8 zeigt die geöffnete Stellung der Gießdüse 9. Zum Verschließen der Gießdüse 9 wird die Stopfenstange 26 in Richtung der Y-Achse so Verfahren, dass die Stopfenstange 26 in die Gießdüse 9 eintaucht und dieser abgedichtet. Für den Fall, dass der Vorherd 5 zwei Gießdüsen 9 umfassen sollte, werden beide Gießdüsen 9 entsprechend verschlossen. Ein unterhalb der Faltenbalgabdichtung 13 vorgesehener Schieber 35 sperrt die Stranggießanlage 3 gasdicht ab. Die Vakuum Induktions-Gießeinrichtung 1 wird in den Kipplagern 6 um die Kippachse so verschwenkt, dass die Gießdüsen 9 von der Stranggießanlage 3 abgehoben und entkoppelt werden. Dabei fließt die Schmelze aus dem Vorherd 5 in die Speicherkammer 4 der Vakuum-Induktions-Gießeinrichtung 1.

Etwa im Bereich der Gießdüse 9 austretende Prozessgase werden über eine Ringabsaugung 48 abgesaugt, die sich um den Umfang der Gießdüse 9 auf der Auslaufseite erstreckt. Die Stopfenstange 26 wird vollständig in die zugehörige Stopfenkammer 25 eingezogen. Der feuerfeste Drehschieber 49 verschließen die betreffenden Öffnungen in der oberen Wand des Vorherdes 5. Anschließend wird das Gestänge 43 so gedreht, dass die Vakuumkammer 45 bezüglich des Vorherdes 5 in die Betriebsstellung verbracht wird. Die Vakuumkammer 45 wird abgesenkt und mit dem betreffenden Vakuumflansch 50 auf der Außenseite des Vorherds 5 in Eingriff gebracht. Sodann wird die Haube 41 innerhalb des Vorherds 5 so abgesenkt, dass sie das Volumen des Vorherds 5 und/oder der Speicherkammer 4 bezüglich der Gießdüse 9 bzw. bezüglich der Atmosphäre abdichtet. In diesem in Figur 8 rechts dargestellten Betriebszustand kann die Stopfenstange 26 der Stopfengießvorrichtung 8 unter atmosphärischen Bedingungen gewechselt werden.

Wenn die Vakuum Gießeinrichtung 1 bezüglich der Stranggießanlage 3 in Richtung der z-Achse in Figur 8 mittels des Untergestells 11 verfahren wurde (siehe Figur 7) ist die Gießdüse 9 von unten frei zugänglich und kann bergmännisch abgebaut werden und durch eine neue Gießdüsen 9 ersetzt werden. Danach kann das Verfahren in umgekehrter Reihenfolge durchgeführt werden.

Eine Gießspiegelregelung in der Stranggießkokille kann über eine Stopfenregelung hydraulisch und/oder pneumatisch und/oder elektromechanisch unter Vakuum und/oder Schutzgas der Videoaufzeichnung erfolgen.

### Bezugszeichenliste

- 1: Vakuum-Induktions-Gießeinrichtung
- 2A, 2B: Vakuum-Induktions-Schmelzeinrichtungen
- 3: Stranggießanlage
- 4: Speicherkammer
- 5: Vorherd
- 6: Kipplager
- 7: Kolben-Zylinder-Anordnungen
- 8: Stopfengießvorrichtung
- 9: Gießdüsen
- 10: Schienen
- 11: Untergestell
- 12: Durchführungen
- 13: Faltenbalgabdichtungen
- 14: Vakuumschieber
- 15: Ofenkammer
- 16: Oberofen
- 17: Schmelztiegel
- 18: Chargierturm
- 19: Chargierkörbe
- 20: Wechselkammer
- 21: Verteilerrinne
- 22: Bunkeranlagen
- 23: Beschickungsleitungen
- 24: Gießschnauze
- 25: Stopfenkammern
- 26: Stopfenstangen
- 27: Vakuumflansch
- 28: Dosiereinrichtung
- 29: Wagen
- 30: Tiegelinduktor
- 35: Schieber
- 40: Verschlusseinheit
- 41: Haube
- 42: Stange
- 43: Gestänge
- 44: erster Antrieb
- 45: Vakuumkammer
- 46: zweiter Antrieb
- 47: dritter Antrieb
- 48: Ringabsaugung
- 49: Drehschieber

## Patentansprüche

1. Vakuum-Induktions-Gießeinrichtung (1) zum Gießen von Metall und Metall-Legierungen unter Vakuum und/oder Schutzgasatmosphäre, die wenigstens eine Speicherkammer (4) und einen mit der Speicherkammer (4) kommunizierenden Vorherd (5) umfasst, der wenigstens eine Stopfengießvorrichtung (8) aufweist, wobei die Vakuum-Induktions-Gießeinrichtung (1) gasdicht an eine Stranggießanlage (3) oder eine Pulververdüsungsanlage als nachgeschaltetes Aggregat lösbar ankoppelbar ist und die Vakuum-Induktions-Gießeinrichtung (1) dazu ausgebildet ist, die Schmelze unter Vakuum und/oder Schutzgasatmosphäre in das nachgeschaltete Aggregat zu übergeben, wobei die Speicherkammer (4) mit dem Vorherd (5) um eine Kippachse drehbar gelagert ist, derart, dass Schmelze von dem Vorherd (5) in die Speicherkammer (4) und zurück verlagerbar ist und die Stopfengießvorrichtung (8) Mittel zum gasdichten Verschließen wenigstens einer Gießdüse (9) innerhalb des Vorherds (5) umfasst, **dadurch gekennzeichnet, dass** die Stopfengießvorrichtung (8) als Mittel zum gasdichten Verschließen der wenigstens einen Gießdüse (9) wenigstens eine feuerfeste Haube (41) umfasst, die innerhalb des Vorherds (5) eine gasdichte Einhausung eines Einlaufs der Gießdüse (9) bildet.

2. Vakuum-Induktions-Gießeinrichtung nach Anspruch 1, **dadurch gekennzeichnet, dass** die Haube (41) an einem führenden Ende einer Stange (42) der Stopfengießvorrichtung (8) angeordnet ist und mit dem Stange (8) verlagerbar ist.

3. Vakuum-Induktions-Gießeinrichtung (1) nach einem der Ansprüche 1 oder 2, **dadurch gekennzeichnet, dass** die Stopfengießvorrichtung (8) wenigstens eine Stopfenverschlusseinheit mit einer Stopfenstange (26) sowie eine weitere Verschlusseinheit (40) mit einer Haube (41) an dem führenden Ende einer Stange (42) aufweist, die dazu ausgebildet sind, wechselweise mit einer Gießdüse (9) zusammenzuwirken.

4. Vakuum-Induktions-Gießeinrichtung (1) nach Anspruch 3, **dadurch gekennzeichnet, dass** die Stopfenverschlusseinheit (8) und die weitere Verschlusseinheit (40) an einem drehbaren Gestänge (43) befestigt sind, das als Revolver ausgebildet ist.

5. Vakuum-Induktions-Gießeinrichtung (1) nach einem der Ansprüche 1 bis 4, **gekennzeichnet durch** wenigstens einen Vakuumschieber (49) innerhalb des Vorherds (5), der dazu ausgebildet ist, eine Durchführung für eine Stopfenstange (26) der Stopfengießvorrichtung (8) gasdicht zu verschließen.

6. Vakuum-Induktions-Gießeinrichtung (1) nach einem der Ansprüche 1 bis 5, **gekennzeichnet durch** Mittel zur Absaugung von Gas an wenigstens einer Gießdüse (9).

7. Vakuum-Induktions-Gießeinrichtung nach einem der Ansprüche 1 bis 6, **dadurch gekennzeichnet, dass** als Mittel zur Absaugung von Gas wenigstens eine Ringabsaugung (48) um eine Gießdüse (9) vorgesehen ist.

8. Verfahren zum Wechseln einer Stopfenstange (26) und/oder eines Verschlusskörpers einer Stopfengießvorrichtung (8) und/oder einer Gießdüse (9) an einer Vakuum-Induktions-Gießeinrichtung (1) zum Gießen von Metall und Metall-Legierungen unter Vakuum und/oder Schutzgasatmosphäre, die wenigstens eine Speicherkammer (4) und einen mit der Speicherkammer (4) kommunizierenden Vorherd (5) umfasst, der wenigstens eine Stopfengießvorrichtung (8) aufweist, wobei die Vakuum-Induktions-Gießeinrichtung (1) gasdicht an eine Stranggießanlage (3) oder eine Pulververdüsungsanlage als nachgeschaltetes Aggregat lösbar ankoppelbar ist und die Vakuum-Induktions-Gießeinrichtung (1) dazu ausgebildet ist, die Schmelze unter Vakuum und/oder Schutzgasatmosphäre in das nachgeschaltete Aggregat zu übergeben, folgende Verfahrensschritte umfassend:
a) Verschließen wenigstens einer Gießdüse (9) mit dem Verschlusskörper der Stopfengießvorrichtung (8),
b) Kippen der Vakuum-Induktions-Gießeinrichtung (1) um eine Kippachse und Abkoppeln der Vakuum-Induktions-Gießeinrichtung (1) von dem nachgeschalteten Aggregat derart, dass die in dem Vorherd (5) befindliche Schmelze in die Speicherkammer (4) verlagert wird,
c) Ausbringen der Stopfenstange (26) mit dem Verschlusskörper aus dem Vorherd (5) unter Aufrechterhaltung von Vakuum und/oder Schutzgasatmosphäre innerhalb der Speicherkammer (4) und des Vorherds (5) und
d) Wechseln der Stopfenstange (26) und/oder des Verschlusskörpers und/oder der Gießdüse (9),
e) Einbringen einer Verschlusseinheit (40) mit einer Haube (41) in den Vorherd (5),
f) gasdichtes Verschließen der wenigstes einen Gießdüse (9) innerhalb des Vorherds (5) unter Verwendung der Haube (41),
g) Wechseln der Gießdüse (9)
h) Ausbringen der Verschlusseinheit (40) und Einbringen einer Stopfenstange (26) mit einem Verschlusskörper unter Aufrechterhaltung von Vakuum und/oder Schutzgasatmosphäre innerhalb der Speicherkammer (4) und des Vorherds (5).

9. Verfahren nach einem der Ansprüche 8 oder 9, **dadurch gekennzeichnet, dass** dieses unter Verwendung der Vakuum-Induktions-Gießeinrichtung (1) nach einem der Ansprüche 1 bis 8 durchgeführt wird

10. Anlage zum Chargieren, Schmelzen und Gießen von Metall und Metall-Legierungen unter Vakuum und/oder Schutzgasatmosphäre umfassend wenigstens eine Vakuum-Induktions-Schmelzeinrichtung (2A,2B), Mittel zum Chargieren von Ausgangsstoffen unter Vakuum und/oder Schutzgas in die wenigstens eine Vakuum-Induktions-Schmelzeinrichtung (2A,2B), wenigstens eine Vakuum-Induktions-Gießeinrichtung (1) mit den Merkmalen eines der Ansprüche 1 bis 9, die an die wenigstens eine Vakuum-Induktions-Schmelzeinrichtung (2A,2B) anschließbar ist, wobei die Vakuum-Induktions-Gießeinrichtung (1) wenigstens eine Speicherkammer (4) umfasst, die gasdicht an eine Stranggießanlage (3) oder eine Pulververdüsungsanlage als nachgeschaltetes Aggregat ankoppelbar ist.

## Claims

1. Vacuum induction casting device (1) for casting metal and metal alloys under vacuum and/or protective gas atmosphere, comprising at least one storage chamber (4) and a forehearth (5) which communicates with the storage chamber (4) and which has at least one stopper casting device (8), wherein the vacuum induction casting device (1) can be gas-tightly and detachably coupled to a continuous casting plant (3) or a powder atomising plant as downstream unit and the vacuum induction casting device (1) is constructed for the purpose of transferring the melt under vacuum and/or protective gas atmosphere to the downstream unit, wherein the storage chamber (4) together with the forehearth is mounted to be rotatable about a tilt axis in such a way that melt is displaceable from the forehearth (5) into the storage chamber (4) and back and the stopper casting device (8) comprises means for gas-tight closure of at least one casting nozzle (9) within the forehearth (5), characteried in that the stopper casting device (8) comprises as means for gas-tight closure of the at least one casting nozzle (8) at least one refractory hood (41) which within the forehearth (5) forms a gas-tight enclosure of an inlet of the casting nozzle (9).

2. Vacuum induction casting device according to claim 1, **characterised in that** the hood (41) is arranged at a leading end of a rod (42) of the stopper casting device (8) and is displaceable by the rod (42).

3. Vacuum induction casting device (1) according to one of claims 1 and 2, **characterised in that** the stopper casting device (8) comprises at least one stopper closure unit with a stopper rod (26) and a further closure unit (40) with a hood (41) at the leading end of a rod (42), these being configured for the purpose of alternating co-operation with a casting nozzle (9).

4. Vacuum induction casting device (1) according to claim 3, **characterised in that** the stopper closure unit (8) and the further closure unit (40) are secured to a rotatable linkage (43), which is constructed as a revolver.

5. Vacuum induction casting device (1) according to any one of claims 1 to 4, **characterised by** at least one vacuum slide (49) within the forehearth (5), the slide being configured to gas-tightly close a passage for a stopper rod (26) of the stopper casting device (8).

6. Vacuum induction casting device (1) according to any one of claims 1 to 5, **characterised by** means for suction of gas at at least one casting nozzle (9).

7. Vacuum induction casting device according to any one of claims 1 to 6, **characterised in that** at least one annular suction device (48) is provided around a casting nozzle (9) as means for suction of gas.

8. Method for changing a stopper rod (26) and/or a closure body of a stopper casting device (8) and/or a casting nozzle (9) at a vacuum induction casting device (1) for casting metal and metal alloys under vacuum and/or protective gas atmosphere, comprising at least one storage chamber (4) and a forehearth (5) which communicates with the storage chamber (4) and which has at least one stopper casting device (8), wherein the vacuum induction casting device (1) can be gas-tightly and detachably coupled to a continuous casting plant (3) or a powder atomising plant as downstream unit and the vacuum induction casting device (1) is constructed for the purpose of transferring the melt under vacuum and/or protective gas atmosphere to the downstream unit, comprising the following method steps:
a) closing at least one casting nozzle (9) by the closure body of the stopper casting device (8),
b) tilting the vacuum induction casting device (1) about a tilt axis and decoupling the vacuum induction casting device (1) from the downstream unit in such a way that the melt present in the forehearth (5) is displaced into the storage chamber (4),
c) removing the stopper rod (26) with the closure body from the forehearth (5) while maintaining vacuum and/or protective gas atmosphere within the storage chamber (4) and the forehearth (5) and
d) changing the stopper rod (26) and/or the closure body and/or the casting nozzle (9).
e) introducing a closure unit (40) with a hood (41) in the forehearth (5),
f) gas-tightly closing the at least one casting nozzle (9) within the forehearth (5) with use of the hood (41),
g) changing the casting nozzle (9) and
h) removing the closure unit (40) and introducing a stopper rod (26) with a closure body while maintaining vacuum and/or protective gas atmosphere within the storage chamber (4) and forehearth (5).

9. Method according to one of claims 8 and 9, **characterised in that** this is carried out with use of the vacuum induction casting device (1) according to any one of claims 1 to 8.

10. Plant for charging, smelting and casting metal and metal alloys under vacuum and/or protective gas atmosphere, comprising at least one vacuum induction smelting device (2A, 2B), means for charging starting materials under vacuum and/or protective gas into the at least one vacuum induction smelting device (2A, 2B), at least one vacuum induction casting device (1) with the features of any one of claims 1 to 9, which is connectible with the at least one vacuum induction smelting device (2A, 2B), wherein the vacuum induction casting device (1) comprises at least one storage chamber (4) which can be gas-tightly coupled to a continuous casting plant (3) or a powder atomising plant as downstream unit.

## Revendications

1. Dispositif de coulée par induction sous vide (1) pour couler des métaux et des alliages métalliques sous vide et/ou sous atmosphère de gaz protecteur, comprenant au moins une chambre de stockage (4) et un avant-foyer (5) communiquant avec la chambre de stockage (4), qui présente au moins un dispositif de coulée à bouchon (8), le dispositif de coulée par induction sous vide (1) pouvant être couplé de manière amovible et étanche aux gaz à un système de coulée continue (3) ou à un système de pulvérisation de poudre en tant qu'unité en aval, et le dispositif de coulée par induction sous vide (1) étant conçu pour transférer la matière fondue sous vide et/ou sous atmosphère de gaz protecteur vers l'unité en aval, la chambre de stockage (4) étant montée de manière rotative autour d'un axe d'inclinaison avec l'avant-foyer (5), de telle sorte que la matière fondue peut être déplacé de l'avant-foyer (5) vers la chambre de stockage (4) et inversement, et le dispositif de coulée à bouchon (8) comprenant des moyens pour fermer de manière étanche aux gaz au moins une buse de coulée (9) à l'intérieur de l'avant-foyer (5), **caractérisé en ce que** le dispositif de coulée à bouchon (8) comprend au moins un capot (41) ignifuge en tant que moyen pour fermer de manière étanche aux gaz l'au moins une buse de coulée (9), qui forme une enceinte étanche aux gaz d'une entrée de la buse de coulée (9) à l'intérieur de l'avant-foyer (5).

2. Dispositif de coulée par induction sous vide selon la revendication 1, **caractérisé en ce que** le capot (41) est disposé à une extrémité avant d'une tige (42) du dispositif de coulée à bouchon (8) et est déplaçable avec la tige (8).

3. Dispositif de coulée par induction sous vide (1) selon l'une des revendications 1 ou 2, **caractérisé en ce que** le dispositif de coulée à bouchon (8) comprend au moins une unité de fermeture à bouchon avec une tige de bouchon (26) ainsi qu'une unité de fermeture additionnelle (40) ayant un capot (41) à l'extrémité avant d'une tige (42), qui sont conçues pour coopérer alternativement avec une buse de coulée (9).

4. Dispositif de coulée par induction sous vide (1) selon la revendication 3, **caractérisé en ce que** l'unité de fermeture à bouchon (8) et l'unité de fermeture additionnelle (40) sont fixées à une armature rotative (43) réalisée sous forme de tourelle.

5. Dispositif de coulée par induction sous vide (1) selon l'une des revendications 1 à 4, **caractérisé par** au moins un coulisseau à vide (49) à l'intérieur de l'avant-foyer (5), qui est conçu pour fermer de manière étanche aux gaz un passage pour une tige de bouchon (26) du dispositif de coulée à bouchon (8).

6. Dispositif de coulée par induction sous vide (1) selon l'une des revendications 1 à 5, **caractérisé par** des moyens d'extraction de gaz à au moins une buse de coulée (9).

7. Dispositif de coulée par induction sous vide selon l'une des revendications 1 à 6, **caractérisé en ce qu'**au moins une aspiration annulaire (48) autour d'une buse de coulée (9) est prévue comme moyen d'extraction de gaz.

8. Procédé pour remplacer une tige de bouchon (26) et/ou un corps de fermeture d'un dispositif de coulée à bouchon (8) et/ou une buse de coulée (9) sur un dispositif de coulée par induction sous vide (1) pour couler des métaux et des alliages métalliques sous vide et/ou sous atmosphère de gaz protecteur comprenant au moins une chambre de stockage (4) et un avant-foyer (5) communiquant avec la chambre de stockage (4), qui présente au moins un dispositif de coulée à bouchon (8), le dispositif de coulée par induction sous vide (1) pouvant être couplé de manière amovible et étanche aux gaz à un système de coulée continue (3) ou à un système de pulvérisation de poudre en tant qu'unité en aval, et le dispositif de coulée par induction sous vide (1) étant conçu pour transférer la matière fondue sous vide et/ou sous atmosphère de gaz protecteur vers l'unité en aval, comprenant les étapes de procédé suivantes :
a) fermer au moins une buse de coulée (9) avec le corps de fermeture du dispositif de coulée à bouchon (8),
b) basculer le dispositif de coulée par induction sous vide (1) autour d'un axe d'inclinaison et découpler le dispositif de coulée par induction sous vide (1) de l'unité en aval de telle sorte que la matière fondue située dans l'avant-foyer (5) soit déplacée vers la chambre de stockage (4),
c) retirer la tige de bouchon (26) avec le corps de fermeture de l'avant-foyer (5) tout en maintenant un vide et/ou une atmosphère de gaz protecteur à l'intérieur de la chambre de stockage (4) et de l'avant-foyer (5) et
d) remplacer la tige de bouchon (26) et/ou le corps de fermeture et/ou de la buse de coulée (9),
e) introduire une unité de fermeture (40) ayant un capot (41) dans l'avant-foyer (5),
f) fermer de manière étanche aux gaz l'au moins une buse de coulée (9) à l'intérieur de l'avant-foyer (5) à l'aide du capot (41),
g) remplacer la buse de coulée (9)
h) retirer l'unité de fermeture (40) et introduire une tige de bouchon (26) avec un corps de fermeture tout en maintenant un vide et/ou une atmosphère de gaz protecteur à l'intérieur de la chambre de stockage (4) et de l'avant-foyer (5).

9. Procédé selon l'une des revendications 8 ou 9, **caractérisé en ce qu'**il est réalisé à l'aide du dispositif de coulée par induction sous vide (1) selon l'une des revendications 1 à 8.

10. Système de chargement, de fusion et de coulée de métaux et d'alliages métalliques sous vide et/ou sous atmosphère de gaz protecteur comprenant au moins une installation de fusion par induction sous vide (2A,2B), des moyens pour charger des matières premières sous vide et/ou sous gaz protecteur dans l'au moins une installation de fusion par induction sous vide (2A,2B), au moins un dispositif de coulée par induction sous vide (1) présentant les caractéristiques de l'une des revendications 1 à 9, qui peut être connecté à ladite au moins une installation de fusion par induction sous vide (2A,2B), le dispositif de coulée par induction sous vide (1) comprenant au moins une chambre de stockage (4) qui peut être reliée de manière étanche aux gaz à un système de coulée continue (3) ou à un système de pulvérisation de poudre en tant qu'unité en aval.
